(19)

Europäisches Patentamt

European Patent Office

Office européen des brevets

(11) **EP 4 109 699 B1**

(12) **EUROPEAN PATENT SPECIFICATION**

(45) Date of publication and mention of the grant of the patent:
**24.07.2024  Bulletin 2024/30**

(21) Application number: **21275088.9**

(22) Date of filing: **25.06.2021**

(51) International Patent Classification (IPC):
*H02J 3/00* *(2006.01)*   *H02J 3/24* *(2006.01)*

(52) Cooperative Patent Classification (CPC):
**H02J 3/24;** H02J 2203/10; H02J 2203/20

(54) **IMPROVEMENTS IN OR RELATING TO STABILITY AND POWER CONTROL IN MULTIPHASE AC NETWORKS**

VERBESSERUNGEN AN ODER IM ZUSAMMENHANG MIT DER STABILITÄTS- UND LEISTUNGSSTEUERUNG IN MEHRPHASIGEN WECHSELSTROMNETZEN

PERFECTIONNEMENTS SE RAPPORTANT À LA STABILITÉ ET AU CONTRÔLE DE LA PUISSANCE DANS DES RÉSEAUX DE COURANT ALTERNATIF MULTIPHASES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.12.2022  Bulletin 2022/52**

(73) Proprietor: **General Electric Technology GmbH 5400 Baden (CH)**

(72) Inventor: **BRIFF, Pablo Stafford, ST16 1WS (GB)**

(74) Representative: **Openshaw & Co. 8 Castle Street Farnham, Surrey GU9 7HR (GB)**

(56) References cited:
**WO-A1-2018/122391     US-A1- 2015 219 702
US-A1- 2017 133 845     US-A1- 2018 219 376**

EP 4 109 699 B1

**Description**

This invention relates to a method of determining actual first and second radius and phase angle values of a first time-domain symmetrical sequence component of an AC voltage in a multi-phase AC network, and to a controller for a power converter operable within such a multi-phase AC network.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power may also be transmitted directly from offshore wind parks to onshore AC power transmission networks

The conversion between DC power and AC power is utilised where it is necessary to interconnect DC and AC networks. In any such power transmission network, converters (i.e. power converters) are required at each interface between AC and DC power to affect the required conversion from AC to DC or from DC to AC.

One type of power converter is a voltage source converter, although other types of power converter are also possible.

WO 2018/122391 A1 relates to a hardware-synchronised integrator for grid monitoring that eliminates the offset in the determination of the grid frequency as well as an invertor which includes the hardware-synchronised integrator.

With the advent of renewable energy systems such as offshore wind generation, the role of robust AC frequency and phase angle displacement estimation have become fundamental features in safely controlling the AC network voltage and power, as well as ensuring the stability of the overall power system of which the AC network is a part. In addition, radius and phase angle values of a symmetrical sequence component in the time-domain, can similarly be used to control the AC network voltage and power, and to help ensure overall power system stability.

According to a first aspect of the invention there is provided a method of determining actual first and second radius and phase angle values of a first time-domain symmetrical sequence component of an AC voltage in a multi-phase AC network, the method comprising the steps of:

(a) expressing a measured AC voltage in the AC network as at least a first time-domain symmetrical sequence component;

(b) equating the first time-domain symmetrical sequence component to a summation of first and second polar quantities, the first polar quantity having a first radius value and a first phase angle value and the second polar quantity having a second radius value and a second phase angle value; and

(c) calculating actual first radius and phase angle values by iteratively subtracting estimated second radius and phase angle values from the first time-domain symmetrical sequence component and calculating actual second radius and phase angle values by iteratively subtracting estimate first radius and phase angle values from the first time-domain symmetrical sequence component, both while driving the difference between the estimated and actual values to zero.

Determining actual first and second radius and phase angle values of a first time-domain symmetrical sequence component is beneficial since it can be used to apply a voltage to a point of common coupling in an AC network to either first or second, i.e. positive or negative, time-domain symmetrical sequence components, or both, or to control the power, current and/or voltage of those components.

Meanwhile, equating the first time-domain symmetrical sequence component to a summation of first and second polar quantities, of the type set out above, desirably sets up an equation with a unique solution and thereby permits the subsequent iterative process to calculate actual first and second radius and phase angle values from initial estimated first and second radius and phase angle values.

Moreover, such an iterative process is relatively speedy since it avoids the additional need to transform the at least first time-domain symmetrical sequence component into further components within a synchronous rotating frame, i.e. a so-called dq-frame, which carries with it a significant transformational processing overhead and thereby computational delay, as well as the need for a considerable degree of filtering. Also, since actual measured values are continuously used to express the at least first time-domain symmetrical sequence component and actual and estimated first and second values are similarly continuously calculated, the iterative process of the invention is not slowed down by the need to wait for discrete sampling periods.

Consequently the method of determining second radius and phase angle values according to the invention avoids the instabilities associated with the resolution of one or more time-domain symmetrical components in existing methods of estimation, and therefore improves the stability and power quality of the corresponding AC network.

Preferably step (c) of calculating actual first and second radius and phase angle values includes using an estimator module to control the steady-state difference between each estimated value and its corresponding actual value towards zero.

The use of an estimator module advantageously drives the difference between each estimated and actual value to zero very quickly with a low computational overhead.

The estimator module may be or include a proportional integral controller with an initial condition input.

Such a proportional integral controller provides the desired quick and low overhead processing, while the inclusion of an initial condition input permits the ready provision of an initial estimated value to the controller at which to begin the required processing.

In a preferred embodiment of the invention step (c) of calculating actual first and second radius and phase angle values includes determining an optimal initial estimated value for at least one of the estimated first and second radius and phase angle values.

Determining one or more optimal initial estimated values has the benefit of speeding up even further the calculation of the corresponding actual first or second value, since fewer iterative steps are needed for the difference between the at least one optimal initial estimated value and the corresponding actual value to reach zero.

Preferably determining an optimal initial estimated value for at least one of the estimated first and second radius and phase angle values includes determining maximum and minimum values of the first time-domain symmetrical sequence component.

Determining maximum and minimum values of the first time-domain symmetrical sequence component, effectively by establishing maximum and minimum values of the summed first and second polar quantities, and utilising the maximum and minimum values to determine one or more optimal initial estimated values, desirably means that the subsequent closed-loop estimation achieved by driving the difference between estimated and actual values to zero only has to compensate for small differences between the estimated and actual values, i.e. only has to compensate for small errors in the or each initial estimated value.

According to a second aspect of the invention there is provided a controller for a power converter operable within a multi-phase AC network, the controller being programmed to determine actual first and second radius and phase angle values of a first time-domain symmetrical component of an AC voltage in the AC network by:

(a) expressing a measured AC voltage in the AC network as at least a first time-domain symmetrical sequence component;

(b) equating the first time-domain symmetrical sequence component to a summation of first and second polar quantities, the first polar quantity having a first radius value and a first phase angle value and the second polar quantity having a second radius value and a second phase angle value; and

(c) calculating actual first radius and phase angle values by iteratively subtracting estimated second radius and phase angle values from the first time-domain symmetrical sequence component and calculating actual second radius and phase angle values by iteratively subtracting estimate first radius and phase angle values from the first time-domain symmetrical sequence component, both while driving the difference between the estimated and actual values to zero.

Optionally the controller is further programmed to modify the AC voltage provided by the power converter using one or both of the calculated actual first radius and phase angle values and the calculated actual second radius and phase angle values.

The controller of the invention shares the benefits associated with the corresponding steps of the method of the invention.

It will be appreciated that the use of the terms "first" and "second", and the like, in this patent specification is merely intended to help distinguish between similar features, and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

There now follows a brief description of preferred embodiments of the invention, by way of non-limiting example, with reference being made to the following figures in which:

Figure 1 shows a schematic view of a portion of an exemplary three-phase AC network;

Figure 2 shows first time-domain symmetrical sequence components of an unbalanced AC voltage in the complex plane; and

Figure 3 shows a schematic view of preferred actions to calculate actual first and second radius and phase angle values according to a step within an embodiment of the method of the invention.

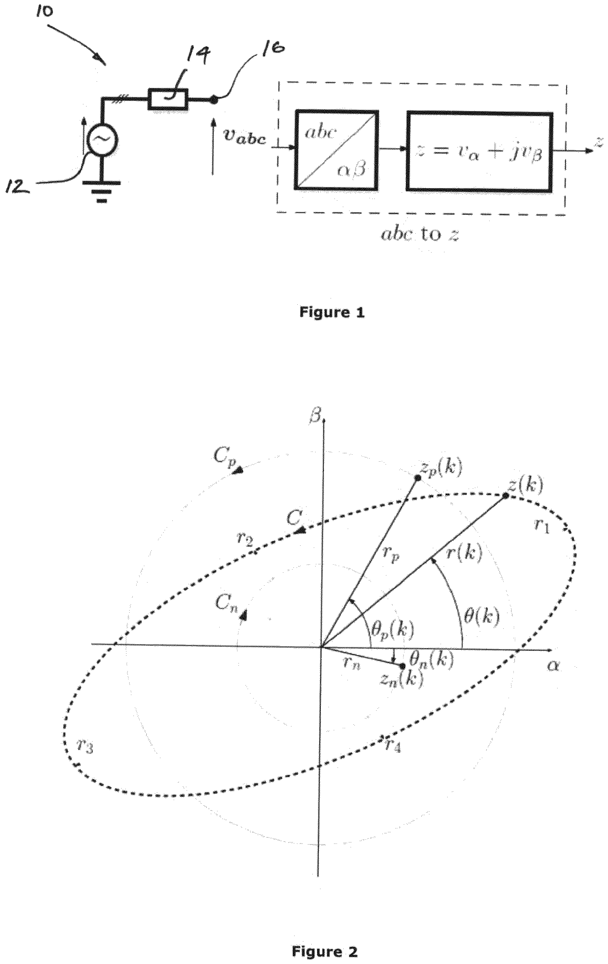

In a method according to a first embodiment of the invention, determining actual first and second radius and phase angle values $(r_p, \theta_p, r_n, \theta_n)$ of a first time-domain symmetrical component ( $v_{abc}^+$ ) of an AC voltage in a multi-phase AC network (10), e.g. a three-phase AC network 10 having a three-phase voltage source 12 and an equivalent series impedance 14 (as shown schematically in Figure 1), includes a first step (a) of expressing a measured AC voltage, e.g. a three phase AC voltage $v_{abc}$ measured at a point of common coupling 16 in the AC network 10, as first and second time-domain symmetrical sequence components.

More particularly, the instantaneous three-phase voltage waveform $v_{abc}$ can be expressed in the following manner:

$$v_{abc} = \begin{bmatrix} v_a \\ v_b \\ v_c \end{bmatrix} = \begin{bmatrix} \sqrt{2}V_a\cos(\omega t + \alpha_a) \\ \sqrt{2}V_b\cos(\omega t + \alpha_b) \\ \sqrt{2}V_c\cos(\omega t + \alpha_c) \end{bmatrix}$$

Thereafter, using the identity

$$\sqrt{2}A\cos(\omega t + \alpha) = \frac{\sqrt{2}}{2}\left(Ae^{j\alpha}e^{j\omega t} + (Ae^{j\alpha}e^{j\omega t})^*\right)$$

the following phasors can be defined:

$$\underline{V}_a = V_a e^{j\alpha_a}$$

$$\underline{V}_b = V_b e^{j\alpha_b}$$

$$\underline{V}_c = V_c e^{j\alpha_c}$$

and thus the aforementioned expression for the instantaneous three-phase voltage waveform $v_{abc}$ can be rewritten as:

$$v_{abc} = \begin{bmatrix} v_a \\ v_b \\ v_c \end{bmatrix} = \frac{\sqrt{2}}{2} \begin{bmatrix} \underline{V}_a e^{j\omega t} + \underline{V}_a^* e^{-j\omega t} \\ \underline{V}_b e^{j\omega t} + \underline{V}_b^* e^{-j\omega t} \\ \underline{V}_c e^{j\omega t} + \underline{V}_c^* e^{-j\omega t} \end{bmatrix}$$

Defining

$$a = \exp\left(j2\pi/3\right)$$

and the decomposition matrix according to Fortescue as

$$S = \begin{bmatrix} 1 & 1 & 1 \\ 1 & a^{-1} & a^{-2} \\ 1 & a^{-2} & a^{-1} \end{bmatrix}$$

means that applying the identity set out above gives

$$v_{abc}^{0+-} = S^{-1} \cdot v_{abc}$$

and then the rewritten expression for the instantaneous three-phase voltage waveform $v_{abc}$ can be transformed into time-domain symmetrical sequence components as:

$$v_{abc}^{0+-} = \begin{bmatrix} v_{abc}^0 \\ v_{abc}^+ \\ v_{abc}^- \end{bmatrix} = \frac{\sqrt{2}}{2} \begin{bmatrix} \left( \underline{V}_0 e^{j\omega t} + \underline{V}_0^* e^{-j\omega t} \right) \\ \left( \underline{V}_1 e^{j\omega t} + \underline{V}_2^* e^{-j\omega t} \right) \\ \left( \underline{V}_2 e^{j\omega t} + \underline{V}_1^* e^{-j\omega t} \right) \end{bmatrix}$$

where,

$$\underline{V}_0 = V_0 e^{j\theta_0} = \frac{1}{\sqrt{3}} \left( \underline{V}_a + \underline{V}_b + \underline{V}_c \right)$$

$$\underline{V}_1 = V_1 e^{j\theta_1} = \frac{1}{\sqrt{3}} \left( \underline{V}_a + a\underline{V}_b + a^2\underline{V}_c \right)$$

$$\underline{V}_2 = V_2 e^{j\theta_2} = \frac{1}{\sqrt{3}} \left( \underline{V}_a + a^2\underline{V}_b + a\underline{V}_c \right)$$

Without loss of generality, the zero-sequence time-domain symmetrical sequence component $v_{abc}^0$ can be assumed to be zero.

Meanwhile $v_{abc}^+$ is a first, i.e. a positive-sequence, time-domain symmetrical sequence component and $v_{abc}^-$ is a second, i.e. a negative-sequence, symmetrical sequence component of the measured AC voltage $v_{abc}$ in the AC network 10, while $\underline{V}_1$ is a positive component phasor and $\underline{V}_2$ is a negative component phasor.

The steady-state component phasors $\underline{V}_1$, $\underline{V}_2$ are contained in the first, i.e. positive-sequence, time-domain symmetrical sequence component $v_{abc}^+$ and so it contains all the necessary information to extract the symmetrical components.

Thereafter, a second step (b) of the preferred method of the invention involves equating the first time-domain symmetrical sequence component, i.e. the positive sequence component $v_{abc}^+$, to a summation of first and second polar quantities, with the first polar quantity having a first radius value and a first phase angle value and the second polar quantity having a second radius value and a second phase angle value.

As indicated above the first, positive time-domain symmetrical sequence component $v_{abc}^+$ is formed of a summation of two circumferences, one rotating anticlockwise, i.e. in a *positive* direction, and one rotating clockwise, i. e. in a *negative,* direction. Thus the first, positive time-domain symmetrical sequence component $v_{abc}^+$ describes an ellipse in an $\alpha\beta$-plane, i.e.

$$v_{abc}^{+} = \frac{\sqrt{2}}{2}\left( \underbrace{V_1 e^{j\omega t}}_{\substack{\text{anticlockwise} \\ \text{circumference}}} + \underbrace{V_2^* e^{-j\omega t}}_{\substack{\text{clockwise} \\ \text{circumference}}} \right)$$

Such circumferences can be represented in a complex plane as polar quantities.

More particularly the circumference rotating in the positive, anticlockwise direction, can be represented as a positive phase sequence circumference $C_p$ having a radius value $r_p$ and a sampled positive phase sequence phase angle value $\theta_p(k)$, and the circumference rotating in the negative, clockwise direction, can be represented as a negative phase sequence circumference $C_n$ having a radius value $r_n$ and a sampled negative phase sequence phase angle value $\theta_n(k)$, as shown in Figure 2.

By definition of positive phase sequence and negative phase sequence phase, these obey the following equations:

$$\theta_p(k) = \theta_1 + \omega k T_s$$

$$\theta_n(k) = -\theta_2 + (-\omega)k T_s$$

from which the ellipse equation above for the first, positive time-domain symmetrical sequence component $v_{abc}^{+}$ can be rewritten as follows:

$$v_{abc}^{+} = \frac{\sqrt{2}}{2}\left( V_1 e^{j\theta_p(k)} + V_2 e^{j\theta_n(k)} \right)$$

Moreover, an instantaneous complex quantity $z(k)$ at a $k$-th sampling instant is a composition of a positive phase sequence complex quantity $z_p(k)$ and a negative phase sequence complex quantity $z_n(k)$. Additionally, the trajectory of samples $z(k)$ describe an ellipse $C$ of radius $r(k)$ and phase angle $\theta(k)$.

Defining

$$r_p = (\sqrt{2}/2)V_1$$

and

$$r_n = (\sqrt{2}/2)V_2$$

the rewritten ellipse equation for the first, positive time-domain symmetrical sequence component $v_{abc}^{+}$ becomes

$$v_{abc}^{+} = z(k) = r_p e^{j\theta_p(k)} + r_n e^{j\theta_n(k)}$$

In other words the first, positive time-domain symmetrical sequence component $v_{abc}^{+}$ is equated to a summation of a first polar quantity having a first radius value $r_p$ and a first phase angle value $\theta_p$ and a second polar quantity having a second radius value $r_n$ and a second phase angle value $\theta_n$.

A further step, step (c), of the preferred method of the invention involves calculating the actual first and second radius and phase angle values $r_p$, $r_n$, $\theta_p$, $\theta_n$.

As can be seen from equating the first, positive time-domain symmetrical sequence component $v_{abc}^{+}$ to first and second polar quantities, i.e. from

$$v_{abc}^{+} = z(k) = r_p e^{j\theta_p(k)} + r_n e^{j\theta_n(k)}$$

this represents a Cartesian addition of two circumferences, each expressed in polar form. Moreover, there is a unique solution to the above equation.

Therefore, one way in which the actual first radius and phase angle values $r_p$, $\theta_p$, may be calculated is by iteratively subtracting estimated second radius and phase angle values $\hat{r}_n$, $\hat{\theta}_n$ from the first time-domain symmetrical sequence component $v_{abc}^{+}$, i.e. according to

$$z(k) - \hat{r}_n e^{j\hat{\theta}_n(k)} = r_p e^{j\theta_p(k)}$$

while driving the difference between respective estimated values $\hat{r}_n$, $\hat{\theta}_n$ and respective actual values $r_p$, $\theta_p$ to zero. In other words, the above-identified equality becomes true when the respective differences, i.e. errors, are equal to zero.

Similarly, one way in which the actual second radius and phase angle values $r_n$, $\theta_n$, may be calculated is by iteratively subtracting estimated second radius and phase angle values $\hat{r}_p$, $\hat{\theta}_p$ from the first time-domain symmetrical sequence component $v_{abc}^{+}$, i.e. according to

$$z(k) - \hat{r}_p e^{j\hat{\theta}_p(k)} = r_n e^{j\theta_n(k)}$$

while driving the difference between respective estimated values $\hat{r}_p$, $\hat{\theta}_p$ and respective actual values $r_n$, $\theta_n$ to zero.

Since there is a unique solution to the equation of the first, positive time-domain symmetrical sequence component $v_{abc}^{+}$ to first and second polar quantities, i.e. to

$$v_{abc}^{+} = z(k) = r_p e^{j\theta_p(k)} + r_n e^{j\theta_n(k)}$$

it is possible to calculate the actual first and second radius and phase angle values $r_p$, $\theta_p$, $r_n$, $\theta_n$ iteratively from initially estimated second and first radius and phase angle values $\hat{r}_p$, $\hat{\theta}_p$, $\hat{r}_n$, $\hat{\theta}_n$ in the aforementioned manner.

More particularly, an estimator module may be used to control the steady-state difference between each estimated value $\hat{r}_p$, $\hat{\theta}_p$, $\hat{r}_n$, $\hat{\theta}_n$ and its corresponding actual value $r_p$, $\theta_p$, $r_n$, $\theta_n$ towards zero.

Examples of possible estimator modules that are able to bring the difference, i.e. error, between the estimated and actual values down to zero include MIMO (multiple input, multiple output) and SISO (single input, single output) modules, but an especially preferred type of estimator module is a proportional integral controller 18 with an initial condition input.

With some manipulation, each of

$$z(k) - \hat{r}_n e^{j\hat{\theta}_n(k)} = r_p e^{j\theta_p(k)}$$

and

$$z(k) - \hat{r}_p e^{j\hat{\theta}_p(k)} = r_n e^{j\theta_n(k)}$$

can be expressed as first and second complex numbers $c_1$, $c_2$, i.e.

$$c_1 = \ln\left(z(k) - \hat{r}_n e^{j\hat{\theta}_n(k)}\right) = \ln r_p + j\theta_p(k)$$

$$c_2 = \ln\left(z(k) - \hat{r}_p e^{j\hat{\theta}_p(k)}\right) = \ln r_n + j\theta_n(k)$$

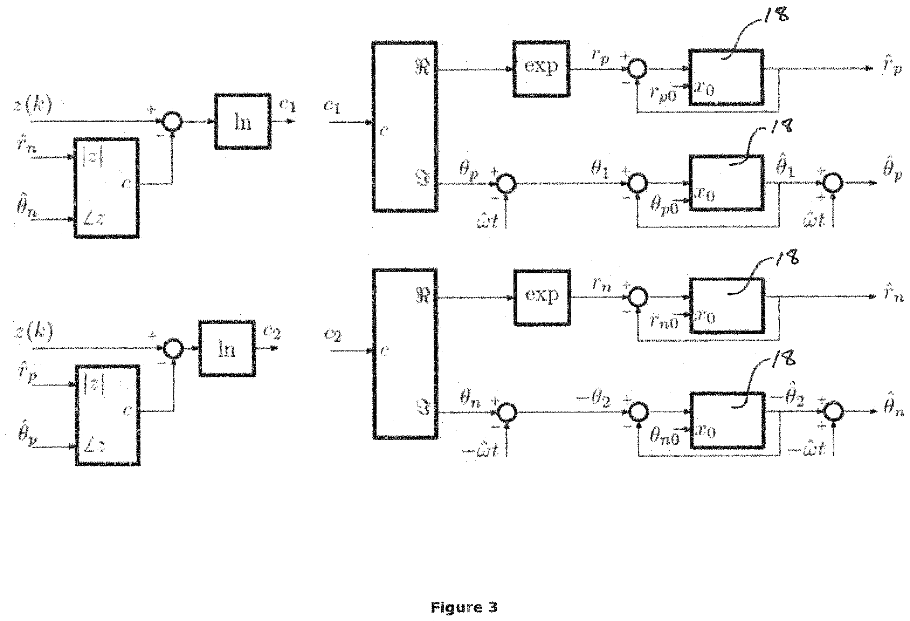

which facilitates the use of four such proportional integral controllers 18 to control the steady-state difference, i.e. error, between each estimated value $\hat{r}_p$, $\hat{\theta}_p$, $\hat{r}_n$, $\hat{\theta}_n$ and its corresponding actual value $r_p$, $\theta_p$, $r_n$, $\theta_n$ towards zero, in the manner illustrated by a schematic algorithm in Figure 3.

In this regard, to calculate each of the first and second phase angle values $\theta_p$, $\theta_n$ each proportional integral controller 18 acts on corresponding initial phase values, i.e. DC values, instead of instantaneous phase values, i.e. AC values, and so an independently generated AC frequency estimate $\hat{w}$ is fed into an integrator and limited to $2\pi$ using a modulus function to generate the quantity

$$\hat{\omega}t \in [0, 2\pi)$$

When all steady-state differences, i.e. errors, between each estimated value $\hat{r}_p$, $\hat{\theta}_p$, $\hat{r}_n$, $\hat{\theta}_n$ and its corresponding actual value $r_p$, $\theta_p$, $r_n$, $\theta_n$ have converged to zero, the unique solution has been found and in turn each of the actual first and second radius and phase angle values $r_p$, $\theta_p$, $r_n$, $\theta_n$ has been calculated.

In addition to the foregoing, in the exemplary first embodiment of the method of the invention, step (c) of calculating actual first and second radius and phase angle values $r_p$, $\theta_p$, $r_n$, $\theta_n$ also includes determining an optimal initial estimated value $r_{p0}$, $\theta_{p0}$, $r_{n0}$, $\theta_{n0}$ for each of the estimated first and second radius and phase angle values $\hat{r}_p$, $\hat{\theta}_p$, $\hat{r}_n$, $\hat{\theta}_n$. As a consequence, the proportional integral controller 18 further includes a reset input.

One way in which such optimal initial estimated values $r_{p0}$, $\theta_{p0}$, $r_{n0}$, $\theta_{n0}$ can be determined is by determining maximum and minimum values of the first positive time-domain symmetrical sequence component $v_{abc}^+$, since this is when the first and second trajectories, i.e. first and second circumferences $C_p$, $C_n$ defined by with the first and second radius and phase angle values $r_p$, $\theta_p$, $r_n$, $\theta_n$ cross with one another, as shown in Figure 2.

A Lyapunov function may be used to determine the maximum and minimum values of the first, positive time-domain symmetrical sequence component $v_{abc}^+$, but in a preferred embodiment of the invention differentiation of the radius r(k) is instead used, i.e. from

$$\frac{dr}{dt}(r_h) = 0, \quad h = \{1, 2, 3, 4\}$$

and

$$\frac{d^2r}{dt^2}(r_i) > 0, \quad i = \{2, 4\}$$

it is possible to establish that the radius r(k) of the first, positive time-domain symmetrical sequence component $v_{abc}^+$ attains a minimum at

$$r = r_2$$

and

$$r = r_4$$

while from

$$\frac{dr}{dt}(r_h) = 0, \quad h = \{1,2,3,4\}$$

and

$$\frac{d^2r}{dt^2}(r_j) < 0, \quad j = \{1,3\}$$

it is possible to establish that the radius r(k) of the first, positive time-domain symmetrical sequence component $v_{abc}^+$ attains a maximum at

$$r = r_1$$

and

$$r = r_3$$

as shown, in both cases, in Figure 2.

At these points, four measurements of the optimal initial estimated first and second phase angle values $\theta_{p0}$, $\theta_{n0}$ are readily available from a first set of equations that are valid at

$$r = r_1$$

i.e.

$$r_p + r_n = r_1$$

$$\theta_{p0} \triangleq \theta(t_1) - \omega t_1$$

$$\theta_{n0} \triangleq \theta(t_1) + \omega t_1$$

and a second set of equations that are valid at

$$r = r_2$$

i.e.

$$s_0 r_p - s_0 r_n = r_2$$

$$\theta_{p0} \triangleq \theta(t_2) - \omega t_2$$

$$\theta_{n0} \triangleq \theta(t_2) + \omega t_2 - \pi$$

where,

$$s_0 = \mathrm{sign}(r_p - r_n)$$

The sign of rotation is

$$s_0 = +1$$

for positively rotating trajectories $C_p$, and is

$$s_0 = -1$$

for negatively rotating trajectories $C_n$, and so

$$s_0 = 0$$

if

$$r_p = r_n$$

At

$$r = r_3$$

the following holds true, with updated time instant $t_3$

$$r_p + r_n = r_1$$

$$\theta_{p0} \triangleq \theta(t_1) - \omega t_1$$

$$\theta_{n0} \triangleq \theta(t_1) + \omega t_1$$

and at

$$r = r_4$$

the following holds true, with updated time instant $t_4$

$$s_0 r_p - s_0 r_n = r_2$$

$$\theta_{p0} \triangleq \theta(t_2) - \omega t_2$$

$$\theta_{n0} \;\triangleq\; \theta(t_2) + \omega t_2 - \pi$$

Moreover, by combining

$$r_p + r_n \;=\; r_1$$

$$\theta_{p0} \;\triangleq\; \theta(t_1) - \omega t_1$$

$$\theta_{n0} \;\triangleq\; \theta(t_1) + \omega t_1$$

and

$$s_0 r_p - s_0 r_n \;=\; r_2$$

$$\theta_{p0} \;\triangleq\; \theta(t_2) - \omega t_2$$

$$\theta_{n0} \;\triangleq\; \theta(t_2) + \omega t_2 - \pi$$

it is straightforward to obtain optimal initial estimated first and second radius values $r_{p0}$, $r_{n0}$ as follows:

$$\begin{bmatrix} r_{p0} \\ r_{n0} \end{bmatrix} \triangleq \begin{bmatrix} 1 & 1 \\ s_0 & -s_0 \end{bmatrix}^{-1} \cdot \begin{bmatrix} r_1 \\ r_2 \end{bmatrix} = \frac{1}{2} \begin{bmatrix} r_1 + s_0 r_2 \\ r_1 - s_0 r_2 \end{bmatrix}$$

where the factor

$$\left(1/s_0\right)$$

in the right-hand side of the foregoing equation is replaced by $s_0$ to avoid a division by zero problem.

Accordingly, the magnitudes and phases obtained from the above are used as the optimal initial estimated value $r_{p0}$, $\theta_{p0}$, $r_{n0}$, $\theta_{n0}$ for each of the estimated first and second radius and phase angle values $\hat{r}_p$, $\hat{\theta}_p$, $\hat{r}_n$, $\hat{\theta}_n$.

**Claims**

1. A method of determining actual first and second radius and phase angle values $(r_p, \theta_p, r_n, \theta_n)$ of a first time-domain symmetrical component ( $v_{abc}^+$ ) of an AC voltage in a multi-phase AC network (10) comprising the steps of:

   (a) expressing a measured AC voltage ($v_{abc}$) in the AC network (10) as at least a first time-domain symmetrical sequence component ( $v_{abc}^+$ );

   (b) equating the first time-domain symmetrical sequence component ( $v_{abc}^+$ ) to a summation of first and second polar quantities, the first polar quantity having a first radius value ($r_p$) and a first phase angle value ($\theta_p$) and the second polar quantity having a second radius value $(r_n)$ and a second phase angle value ($\theta_n$); and

   (c) calculating actual first radius and phase angle values ($r_p$, $\theta_p$) by iteratively subtracting estimated second radius and phase angle values ($\hat{r}_n$, $\hat{\theta}_n$) from the first time-domain symmetrical sequence component ( $v_{abc}^+$ )

and calculating actual second radius and phase angle values $(r_n, \theta_n)$ by iteratively subtracting estimate first radius and phase angle values $(\hat{r}_p, \hat{\theta}_p)$ from the first time-domain symmetrical sequence component ( $v_{abc}^+$ ), both while driving the difference between the estimated $(\hat{r}_p, \hat{\theta}_p, \hat{r}_n, \hat{\theta}_n)$ and actual $(r_p, \theta_p, r_n, \theta_n)$ values to zero.

2. A method according to Claim 1 wherein step (c) of calculating actual first and second radius and phase angle values $(r_p, \theta_p, r_n, \theta_n)$ includes using an estimator module to control the steady-state difference between each estimated value $(\hat{r}_p, \hat{\theta}_p, \hat{r}_n, \hat{\theta}_n)$ and its corresponding actual value $(r_p, \theta_p, r_n, \theta_n)$ towards zero.

3. A method according to Claim 2 wherein the estimator module is or includes a proportional integral controller (18) with an initial condition input.

4. A method according to any proceeding claim wherein step (c) of calculating actual first and second radius and phase angle values $(r_p, \theta_p, r_n, \theta_n)$ includes determining an optimal initial estimated value $(r_{p0}, \theta_{p0}, r_{n0}, \theta_{n0})$ for at least one of the estimated first and second radius and phase angle values $(\hat{r}_p, \hat{\theta}_p, \hat{r}_n, \hat{\theta}_n)$.

5. A method according to Claim 4 wherein determining an optimal initial estimated value $(r_{p0}, \theta_{p0}, r_{n0}, \theta_{n0})$ for at least one of the estimated first and second radius and phase angle values $(\hat{r}_p, \hat{\theta}_p, \hat{r}_n, \hat{\theta}_n)$ includes determining maximum and minimum values of the first time-domain symmetrical sequence component ( $v_{abc}^+$ ).

6. A controller for a power converter operable within a multi-phase AC network (10), the controller being programmed to determine actual first and second radius and phase angle values $(r_p, \theta_p, r_n, \theta_n)$ of a first time-domain symmetrical component $(v_{abc}^+)$ of an AC voltage in the AC network (10) by:

    (a) expressing a measured AC voltage $(v_{abc})$ in the AC network (10) as at least a first time-domain symmetrical sequence component ( $v_{abc}^+$ );

    (b) equating the first time-domain symmetrical sequence component ( $v_{abc}^+$ ) to a summation of first and second polar quantities, the first polar quantity having a first radius value $(r_p)$ and a first phase angle value $(\theta_p)$ and the second polar quantity having a second radius value $(r_n)$ and a second phase angle value $(\theta_n)$; and

    (c) calculating actual first radius and phase angle values $(r_p, \theta_p)$ by iteratively subtracting estimated second radius and phase angle values $(\hat{r}_n, \hat{\theta}_n)$ from the first time-domain symmetrical sequence component ( $v_{abc}^+$ ) and calculating actual second radius and phase angle values $(r_n, \theta_n)$ by iteratively subtracting estimate first radius and phase angle values $(\hat{r}_p, \hat{\theta}_p)$ from the first time-domain symmetrical sequence component ( $v_{abc}^+$ ), both while driving the difference between the estimated $(\hat{r}_p, \hat{\theta}_p, \hat{r}_n, \hat{\theta}_n)$ and actual $(r_p, \theta_p, r_n, \theta_n)$ values to zero.

7. A controller according to Claim 6 further programmed to modify the AC voltage provided by the power converter using one or both of the calculated actual first radius and phase angle values $(r_p, \theta_p)$ and the calculated actual second radius and phase angle values $(r_n, \theta_n)$.

**Patentansprüche**

1. Verfahren zum Bestimmen tatsächlicher erster und zweiter Radius- und Phasenwinkelwerte $(r_p, \theta_p, r_n, \theta_n)$ einer ersten symmetrischen Komponente im Zeitbereich ( $v_{abc}^+$ ) einer Wechselspannung in einem mehrphasigen Wechselstromnetz (10), das die Schritte umfasst zum:

    (a) Ausdrücken einer gemessenen Wechselspannung $(v_{abc})$ im Wechselstromnetz (10) als mindestens eine erste symmetrische Sequenzkomponente im Zeitbereich ( $v_{abc}^+$ );

    (b) Gleichsetzen der ersten symmetrischen Sequenzkomponente im Zeitbereich ( $v_{abc}^+$ ) mit einer Summierung erster und zweiter polarer Mengen, wobei die erste polare Menge einen ersten Radiuswert ($r_p$) und einen ersten Phasenwinkelwert ($\theta_p$) aufweist, und die zweite polare Menge einen zweiten Radiuswert ($r_n$) und einen zweiten Phasenwinkelwert ($\theta_n$) aufweist; und

(c) Berechnen tatsächlicher erster Radius- und Phasenwinkelwerte ($r_p$, $\theta_p$) durch iteratives Subtrahieren geschätzter zweiter Radius- und Phasenwinkelwerte ($r_p$, $\hat{\theta}_p$) von der ersten symmetrischen Sequenzkomponente im Zeitbereich ( $v_{abc}^+$ ) und Berechnen tatsächlicher zweiter Radius- und Phasenwinkelwerte (,$r_n$, $\theta_n$) durch iteratives Subtrahieren geschätzter erster Radius- und Phasenwinkelwerte ($\hat{r}_p$, $\hat{\theta}_p$) von der ersten symmetrischen Sequenzkomponente im Zeitbereich ( $v_{abc}^+$ ), beides während die Differenz zwischen den geschätzten ($\hat{r}_p$, $\hat{\theta}_p$, $\hat{r}_n$, $\hat{\theta}_n$) und den tatsächlichen ($r_p$, $\theta_p$, $r_n$, $\theta_n$) Werten abgesteuert wird.

2. Verfahren nach Anspruch 1, wobei Schritt (c) des Berechnens tatsächlicher erster und zweiter Radius- und Phasenwinkelwerte ($r_p$, $\theta_p$, $r_n$, $\theta_n$) die Verwendung eines Schätzermoduls beinhaltet, um die stationäre Differenz zwischen jedem geschätzten Wert ($\hat{r}_p$, $\hat{\theta}_p$, $\hat{r}_n$, $\hat{\theta}_n$) und seinem entsprechenden tatsächlichen Wert ($r_p$, $\theta_p$, $r_n$, $\theta_n$) in Richtung Null zu regeln.

3. Verfahren nach Anspruch 2, wobei das Schätzermodul eine Proportional-Integral-Steuereinheit (18) mit einem Anfangszustandseingang ist oder eine solche beinhaltet.

4. Verfahren nach einem vorstehenden Anspruch, wobei Schritt (c) des Berechnens tatsächlicher erster und zweiter Radius- und Phasenwinkelwerte ($r_p$, $\theta_p$, $r_n$, $\theta_n$) Bestimmen eines optimalen geschätzten Anfangswerts ($r_{p0}$, $\theta_{p0}$, $r_{n0}$, $\theta_{n0}$) für mindestens eine der geschätzten ersten und zweiten Radius- und Phasenwinkelwerte ($\hat{r}_p$, $\hat{\theta}_p$, $\hat{r}_n$, $\hat{\theta}_n$) beinhaltet.

5. Verfahren nach Anspruch 4, wobei das Bestimmen eines optimalen geschätzten Anfangswerts ($r_{p0}$, $\theta_{p0}$, $r_{n0}$, $\theta_{n0}$) für mindestens eine der geschätzten ersten und zweiten Radius- und Phasenwinkelwerte ($\hat{r}_p$, $\hat{\theta}_p$, $\hat{r}_n$, $\hat{\theta}_n$) Bestimmen von Maximal- und Minimalwerten der ersten symmetrischen Sequenzkomponente im Zeitbereich ( $v_{abc}^+$ ) beinhaltet.

6. Steuereinheit für einen Leistungswandler, der in einem mehrphasigen Wechselstromnetz (10) betreibbar ist, wobei die Steuereinheit dazu programmiert ist, tatsächliche erste und zweite Radius- und Phasenwinkelwerte ($r_p$, $\theta_p$, $r_n$, $\theta_n$) einer ersten symmetrischen Komponente im Zeitbereich ( $v_{abc}^+$ ) einer Wechselspannung im Wechselstromnetz (10) zu bestimmen, durch:

(a) Ausdrücken einer gemessenen Wechselspannung ( $v_{abc}^+$ ) im Wechselstromnetz (10) als mindestens eine erste symmetrische Sequenzkomponente im Zeitbereich ( $v_{abc}^+$ );

(b) Gleichsetzen der ersten symmetrischen Sequenzkomponente im Zeitbereich ( $v_{abc}^+$ ) mit einer Summierung erster und zweiter polarer Mengen, wobei die erste polare Menge einen ersten Radiuswert ($r_p$) und einen ersten Phasenwinkelwert ($\theta_p$) aufweist, und die zweite polare Menge einen zweiten Radiuswert ($r_n$) und einen zweiten Phasenwinkelwert ($\theta_n$) aufweist; und

(c) Berechnen tatsächlicher erster Radius- und Phasenwinkelwerte ($r_p$, $\theta_p$) durch iteratives Subtrahieren geschätzter zweiter Radius- und Phasenwinkelwerte ($r_n$, $\hat{\theta}_n$) von der ersten symmetrischen Sequenzkomponente im Zeitbereich ( $v_{abc}^+$ ) und Berechnen tatsächlicher zweiter Radius- und Phasenwinkelwerte ($r_n$, $\theta_n$) durch iteratives Subtrahieren geschätzter erster Radius- und Phasenwinkelwerte ($r_p$, $\hat{\theta}_p$) von der ersten symmetrischen Sequenzkomponente im Zeitbereich ( $v_{abc}^+$ ), beides während die Differenz zwischen den geschätzten ($\hat{r}_p$, $\hat{\theta}_p$, $\hat{r}_n$, $\hat{\theta}_n$) und den tatsächlichen ($r_p$, $\theta_p$, $r_n$, $\theta_n$) Werten abgesteuert wird.

7. Steuereinheit nach Anspruch 6, die weiter dazu programmiert ist, die vom Leistungswandler bereitgestellte Wechselspannung unter Verwendung einer oder beider der berechneten tatsächlichen ersten Radius- und Phasenwinkelwerte ($r_p$, $\theta_p$) und der berechneten tatsächlichen zweiten Radius- und Phasenwinkelwerte (,$r_n$, $\theta_n$) zu ändern.

**Revendications**

1. Procédé de détermination de première et seconde valeurs réelles de rayon et d'angle de phase $(r_p, \theta_p, r_n, \theta_n)$ d'une première composante symétrique dans le domaine temporel ( $v_{abc}^+$ ) d'une tension CA dans un réseau CA multiphasé (10), comprenant les étapes suivantes :

   (a) l'expression d'une tension CA mesurée $(v_{abc})$ dans le réseau CA (10) en tant qu'au moins une première composante de séquence symétrique dans le domaine temporel $((v_{abc}^+)$ ;

   (b) assimilant la première composante de séquence symétrique dans le domaine temporel ( $v_{abc}^+$ ) à une somme de première et seconde quantités polaires, la première quantité polaire présentant une première valeur de rayon $(r_p)$ et une première valeur d'angle de phase $(\theta_p)$ et la seconde quantité polaire présentant une seconde valeur de rayon $(r_n)$ et une seconde valeur d'angle de phase $(\theta_n)$ ; et

   (c) calculant des premières valeurs réelles de rayon et d'angle de phase $(r_p, \theta_p)$ en soustrayant de manière itérative des secondes valeurs estimées de rayon et d'angle de phase $(\hat{r}_p, \hat{\theta}_p)$ de la première composante de séquence symétrique dans le domaine temporel ( $v_{abc}^+$ ) et calculant des secondes valeurs réelles de rayon et d'angle de phase $(, r_n, \theta_n)$ en soustrayant de manière itérative des premières valeurs estimées de rayon et d'angle de phase $(\hat{r}_p, \hat{\theta}_p)$ de la première composante de séquence symétrique dans le domaine temporel ( $v_{abc}^+$ ), toutes deux tout en amenant la différence entre les valeurs estimées $(\hat{r}_p, \hat{\theta}_p, \hat{r}_n, \hat{\theta}_n)$ et les valeurs réelles $(r_p, \theta_p, r_n, \theta_n)$ à converger vers zéro.

2. Procédé selon la revendication 1, dans lequel l'étape (c) de calcul des première et seconde valeurs réelles de rayon et d'angle de phase $(r_p, \theta_p, r_n, \theta_n)$ inclut l'utilisation d'un module estimateur pour commander la différence en régime permanent entre chaque valeur estimée $(\hat{r}_p, \hat{\theta}_p, \hat{r}_n, \hat{\theta}_n)$ et sa valeur réelle correspondante $(r_p, \theta_p, r_n, \theta_n)$ vers zéro.

3. Procédé selon la revendication 2, dans lequel le module estimateur est, ou inclut, un dispositif de commande proportionnel intégral (18) avec une entrée de condition initiale.

4. Procédé selon une quelconque revendication précédente, dans lequel l'étape (c) de calcul des première et seconde valeurs réelles de rayon et d'angle de phase $(r_p, \theta_p, r_n, \theta_n)$ inclut la détermination d'une valeur estimée initiale optimale $(r_{p0}, \theta_{p0}, r_{n0}, \theta_{n0})$ pour au moins l'une des première et seconde valeurs estimées de rayon et d'angle de phase $(\hat{r}_p, \hat{\theta}_p, \hat{r}_n, \hat{\theta}_n)$.

5. Procédé selon la revendication 4, dans lequel la détermination d'une valeur estimée initiale optimale $(r_{p0}, \theta_{p0}, r_{n0}, \theta_{n0})$ pour au moins l'une des première et seconde valeurs estimées de rayon et d'angle de phase $(\hat{r}_p, \hat{\theta}_p, \hat{r}_n, \hat{\theta}_n)$ inclut la détermination de valeurs maximale et minimale de la première composante de séquence symétrique dans le domaine temporel ( $v_{abc}^+$ ).

6. Dispositif de commande pour un convertisseur de puissance pouvant fonctionner dans un réseau CA multiphasé (10), le dispositif de commande étant programmé pour déterminer des première et seconde valeurs réelles de rayon et d'angle de phase $(r_p, \theta_p, r_n, \theta_n)$ d'une première composante symétrique dans le domaine temporel ( $v_{abc}^+$ ) d'une tension CA dans le réseau CA (10) en :

   (a) exprimant une tension CA mesurée ( $v_{abc}^+$ ) dans le réseau CA (10) en tant qu'au moins une première composante de séquence symétrique dans le domaine temporel $(v_{abc}^+)$ ;

   (b) assimilant la première composante de séquence symétrique dans le domaine temporel ( $v_{abc}^+$ ) à une somme de première et seconde quantités polaires, la première quantité polaire présentant une première valeur de rayon $(r_p)$ et une première valeur d'angle de phase $(\theta_p)$ et la seconde quantité polaire présentant une seconde valeur de rayon $(r_n)$ et une seconde valeur d'angle de phase $(\theta_n)$ ; et

   (c) calculant des premières valeurs réelles de rayon et d'angle de phase $(r_p, \theta_p)$ en soustrayant de manière itérative des secondes valeurs estimées de rayon et d'angle de phase $(\hat{r}_n, \hat{\theta}_n)$ de la première composante de séquence symétrique dans le domaine temporel ( $v_{abc}^+$ ) et calculant des secondes valeurs réelles de rayon et d'angle de phase $(r_n, \theta_n)$ en soustrayant de manière itérative des premières valeurs estimées de rayon et d'angle de phase $(\hat{r}_p, \hat{\theta}_p)$ de la première composante de séquence symétrique dans le domaine temporel ( $v_{abc}^+$ ), toutes deux tout en amenant la différence entre les valeurs estimées $(r_p, \hat{\theta}_p, \hat{r}_n, \hat{\theta}_n)$ et les valeurs réelles $(r_p, \theta_p, r_n, \theta_n)$ à converger vers zéro.

**7.** Dispositif de commande selon la revendication 6, programmé en outre pour modifier la tension CA fournie par le convertisseur de puissance à l'aide de l'une ou des deux premières valeurs réelles calculées de rayon et d'angle de phase $(r_p, \theta_p)$ et des secondes valeurs réelles calculées de rayon et d'angle de phase $(, r_n, \theta_n)$.

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018122391 A1